# EUROPÄISCHE PATENTANMELDUNG

(11) **EP 2 148 273 A1**
(43) Veröffentlichungstag der Anmeldung: **27.01.2010**
(21) Anmeldenummer: 08013105.5
(22) Anmeldetag: 21.07.2008
(51) Int. Cl.: G06F 9/44

(54) **Dynamisches Hilfesystem**

(71) Anmelder: Siemens Aktiengesellschaft, 80333 München (DE)
(72) Erfinder: Banik, Thomas, 91058 Erlangen (DE); Lange, Ronald, 90766 Fürth (DE); Munoz Ibarra, Pablo, 91058 Erlangen (DE); Talanis, Thomas, 91336 Heroldsbach (DE); Volkmann, Frank, 90475 Nürnberg (DE)

(57) **Zusammenfassung**

Dynamisches Hilfesystem mit einem Speicher zur Protokollierung von Anwenderaktionen als Folge von Arbeitsschritten, einer Datenbasis von als Schrittketten hinterlegten Bedienmustern, Mittel zum Erzeugen von Arbeitsablaufmustern durch einen Vergleich der protokollierten Arbeitsschritte mit den hinterlegten Schrittketten und einer Hilfefunktion zur Bereitstellung von zu einem Arbeitsablauf passender Hilfeinformation.

## Beschreibung

Die Erfindung betrifft ein dynamisches Hilfesystem sowie ein Verfahren zur dynamischen Bereitstellung von Hilfeinformation.

Moderne Softwareanwendungen werden immer komplexer und erlauben in der Regel einem Anwender vielfältige Aufgaben zu erledigen. Die Anzahl der möglichen Zustände einer Softwareanwendung und die damit verbundenen unterschiedlichen Möglichkeiten darauf zu reagieren sind enorm. Hierbei treten naturgegeben immer wieder Situationen auf, in denen der Anwender auf eine externe Hilfe angewiesen ist. Dies kommt insbesondere häufig vor, wenn der Anwender bei der Benutzung der Software Wege beschreitet, die der Hersteller der Software nicht vorgesehen hat. Eine derartige Situation kann vor allem auch bei der Erstellung von Engineering Lösungen mit Hilfe moderner Engineering Software bzw. Engineering Systemen auftreten. Kann der Anwender der Software das Problem nicht lösen, so wendet er sich heutzutage häufig an Kollegen mit mehr Erfahrung, was zu einem Produktivitätsverlust führt oder er muss sich an eine Hotline wenden, was sowohl für den Anwender als auch den Vertreiber bzw. Hersteller des Softwareproduktes aufwendig ist.

In modernen Softwareanwendungen bemüht man sich deswegen in der Regel um eine Hilfefunktionalität, die dem Anwender aufgrund des entsprechenden Kontextes, in dem er sich gerade befindet, eine mögliche Hilfeinformation zur Verfügung stellt. Bekannt ist aus dem Stand der Technik z.B. der "Karl-Klammer-Mechanismus" (Bildschirm Avatar), wobei dem Anwender für bestimmte vorgesehene Anwendungsfälle eine besondere Hilfestellung angeboten wird. Die hierbei verwendeten Techniken sind die bereits bekannten Mittel der kontext-sensitiven Hilfe. Hierbei wird die Hilfe zu einem Kontext, also einem Fixpunkt bzw. einer definierten Situation, in der der Anwender sich in seiner Interaktion mit der Softwareanwendung befindet, bereitgestellt.

Ein weiterer bekannter Mechanismus, der unter dem Stichwort "Tell Microsoft about this problem" bekannt ist, besteht darin, die Daten des Anwenders, die zu dem Fehlerfall gehören, an den Hersteller der Software zu versenden. Hierbei hat der Anwender jedoch weder Einfluss auf die versendeten Daten noch bekommt er eine direkt Rückkopplung von dem Hersteller bzw. Vertreiber der Software auf sein aktuelles Problem. Aus diesem Grund ist diese Technik bei den Anwendern nicht sehr akzeptiert.

Die Aufgabe der vorliegenden Erfindung besteht daher darin, dem Anwender einer komplexen Software eine verbesserte dynamische Hilfe anzubieten, welche das individuelle Verhalten des Anwenders berücksichtigt.

Die Aufgabe wird gelöst durch ein dynamisches Hilfesystem mit einem Speicher zur Protokollierung von Anwenderaktionen als Folge von Arbeitsschritten, einer Datenbasis von als Schrittketten hinterlegten Bedienmustern, Mittel zur Erzeugung von Arbeitsablaufmustern durch einen Vergleich der protokollierten Arbeitsschritte mit den hinterlegten Schrittketten und einer Hilfefunktion zur Bereitstellung von zu einem Arbeitsablauf passender Hilfeinformation.

Des Weiteren wird die Aufgabe gelöst, durch ein Verfahren zur dynamischen Bereitstellung von Hilfeinformation, bei dem Anwenderaktionen als Folge von Arbeitsschritten protokolliert werden, Bedienmuster als Schrittketten in einer Datenbasis hinterlegt werden, Arbeitsablaufsmuster durch einen Vergleich der protokollierten Arbeitsschritte mit den hinterlegten Schrittketten erzeugt werden und passende Hilfeinformation zu einem Arbeitsablauf durch eine Hilfefunktion bereitgestellt wird.

Der Erfindung liegt die Erkenntnis zugrunde, dass eine Hilfeinformation, die lediglich auf der aktuellen Bediensituation bzw. dem aktuellen Kontext beruht, für einen Anwender u.U. von geringerer Wertigkeit ist, da das Anwenderverhalten, was zu dieser Situation geführt hat, nicht mit für die Informationsgenerierung einbezogen ist. Ein Anwender kann auf verschiedenen Wegen zum gleichen Kontext bzw. zur gleichen Situation gelangt sein und bekommt dann auch die gleiche Hilfeinformation bereitgestellt, unabhängig davon wie sich die Situation für ihn überhaupt darstellt.

Aus diesem Grund werden im Rahmen der vorliegenden Erfindung die Anwenderaktionen, die zu einer bestimmten Situation geführt haben, protokolliert und als Folge von Arbeitsschritten gespeichert. Es ist also zu jedem Zeitpunkt nachvollziehbar, durch welche verschiedenen Arbeitsschritte bzw. auf welchem Weg ein Anwender in eine bestimmte Situation im Zusammenhang mit der Bedienungssoftware gelangt ist. Diese protokollierten Arbeitsschritte werden dann im Rahmen der vorliegenden Erfindung mit Daten, die im System hinterlegt sind, verglichen. Diese Daten liegen in Form von Schrittketten vor und beschreiben Bedienmuster. Die Daten können hierbei z.B. in Form von Ontologien im System hinterlegt sein. Hierbei wäre die Datenbasis, mit der die aktuellen Arbeitsschritte verglichen werden, praktisch im System selber aufgebaut und würde aus allen in der Vergangenheit getätigten Schrittketten erzeugt werden.

Das System lernt somit gewissermaßen selbst, welche Schrittketten bestimmten Bedienmustern entsprechen. Aus dem Vergleich der aktuell protokollierten Arbeitsschritte mit den hinterlegten Schrittketten wird erfindungsgemäß ein Arbeitsablaufmuster generiert. Durch das im System hinterlegte Wissen kann aufgrund des Arbeitsablaufmusters, also des Weges den der Anwender im Rahmen seiner Interaktion mit der Software genommen hat, erstellt. Einem entsprechenden Arbeitsablauf kann dann eine passende Hilfeinformation, die nicht nur den aktuellen Kontext sondern den Arbeitsablauf, der zum aktuellen Kontext geführt hat, mit berücksichtigen. Hierdurch kommt der Benutzer der Software, die mit einem derartigen dynamischen Hilfesystem ausgestattet ist, eine Hilfeinformation, die wesentlich besser zu seiner aktuellen Situation passt und ihm damit eine höherwertige Information gibt, als wenn die Information lediglich auf dem aktuellen Kontext beruht. Das Workflow-Muster, das der Anwender der Software durchlaufen hat, wird somit als Grundlage für die bereitzustellende Information genutzt und die Hilfe kann wesentlich spezifischer auf die Bedürfnisse des Anwenders zugeschnitten werden.

Eine weitere vorteilhafte Ausbildung der Erfindung ist dadurch gekennzeichnet, dass eine zentrale Einheit, beispielsweise eine Arbeitsgruppe, eine zentrale gemeinsame zentrale Datenbasis, ein Hilfesystem oder ein zentraler Prozessor zur Steuerung der Aktion eines oder mehrer Anwender vorgesehen ist. Hierdurch wird innerhalb des Systems auf einfache Weise sichergestellt, dass eine Komponente auf dem System die Interaktionen eines oder mehrerer Anwender auch protokollieren oder analysieren kann und diese Informationen somit permanent zur Verfügung stehen. Die Aktionen des bzw. der Anwender werden hierbei auf der Ebene der ablaufenden Kommandos protokolliert. Über eine zentrale Einheit kann man somit auf alle Aktionen, die die Anwender bzw. User getätigt haben, zugreifen.

Eine weitere vorteilhafte Ausbildung des Systems besteht darin, dass die Hilfeinformation als elektronisches Handbuch, Liste mit häufig gestellten Fragen oder als Link vom Internet bereitgestellt wird. Hierdurch kann mit Hilfe des dynamischen Systems auf einfache Weise die Hilfeinformation aus mehreren Quellen erzeugt und bereitgestellt werden.

Eine weitere vorteilhafte Ausbildung der Erfindung besteht darin, dass die Hilfeinformation als Verweis auf die Hotline erfolgt. Wenn das System erkennt, dass eine Hilfeinformation, die dem Benutzer aus dem System selbst heraus bereitgestellt werden kann, nicht ausreichend ist bzw. nicht vorliegt, so kann mit Hilfe der vorliegenden Erfindung automatisch zu dem entsprechenden Benutzungsablauf, den der Anwender durchlaufen hat, die Hotline informiert werden bzw. ein Verweis auf die Hotline erfolgen. Hierbei können dann die protokollierten Arbeitsschritte des Anwenders auch an die Hotline übertragen werden. Dies kann automatisch oder auf Freigabe durch den Anwender erfolgen. Dies ermöglicht der Hotline eine wesentlich bessere Interpretation der Sachlage, weil sie weiß, über welche Interaktionen der Anwender in die entsprechende Situation gelangt ist. Die Hotline ist auf Basis der übertragenen Arbeitsschritte, die der Anwender durchgeführt hat, somit wesentlich besser in der Lage, die notwendige Hilfestellung für den Anwender zu leisten.

Eine weitere vorteilhafte Ausbildung der Erfindung ist dadurch gekennzeichnet, dass das Hinzufügen von Folgen von Arbeitsschritten von Anwendern zur existierenden Datenbasis von als Schrittketten hinterlegten Bedienmustern vorgesehen ist. Hierbei wird vom Anwender selbst Information generiert, und kann dann als weitere Datenbasis bzw. als Kontext in Zukunft wieder zur Verfügung gestellt werden. Der Benutzer, der die Information generiert, wird hierbei entlastet. Alle Informationen, die zu einem Fehler führen und die auch zu einer Lösung für den aufgetretenen Fehler führen, werden vom System automatisch selbst generiert. Sie werden dem System als Kontextinformation der Datenbasis zugeführt. Die Arbeitsschritte des Anwenders werden dabei als Schrittketten gespeichert und die Bedienmuster sind somit im System hinterlegt.

Hierbei kann der Anwender, wenn er das möchte, die generierten Information auch noch mit eigener Information weiterhin anreichern. Dies wäre für zukünftige Nutzer des Systems besonders hilfreich. Die Information, die durch die Anwender selbst erzeugt wurde, kann auch im späteren noch durch die Benutzer oder andere Benutzer des Systems ergänzt bzw. angereichert werden. Dadurch wird das System immer präziser im Hinblick auf die mögliche bereitgestellte Hilfeinformation. Die Information, die sich über die Zeit aus dem System selber generiert und immer verbessert wird, kann dann beispielsweise auch zur Erstellung eines "How-To" Handbuchs verwendet werden. Die Information, wie man mit der komplexen Software oder beispielsweise einem Engineering System im Rahmen einer Erstellung einer Automatisierungslösung am besten umgeht, kann quasi automatisch generiert werden.

Eine weitere vorteilhafte Ausbildung der Erfindung besteht darin, dass mehrere Stationen zum Zugriff auf das Hilfesystem durch Anwender vorgesehen sind. Hierdurch wird ermöglicht, dass mehrere Benutzer gleichzeitig auf das System zugreifen und auch an der Erstellung von neuer Information, die dann in die Datenbasis des Systems eingefügt wird, beteiligt sind. Dadurch wächst das systeminterne Wissen über die vorkommenden Bedienfehler schneller und im System werden verschiedene Bedienungsmuster verschiedener Anwender gespeichert. Hierdurch ist es möglich, eine sehr umfassende Bereitstellung von Hilfeinformation auf einfachen Weg zu bewerkstelligen. Somit entsteht für einen bestimmten Kunden bzw. Anwenderkreis ein angepasstes Softwaresystem, in das nicht nur die Eigenheiten eines einzelnen Nutzers sondern die einer ganzen Community einfließen. Die Anpassung des Systems kann hierbei entweder auf der einfachen Interaktionsbeobachtung erfolgen oder auch gezielt durch die Anwender des Systems vorgenommen werden. Die Software Community speist sich somit durch die Analyse der Anwenderinteraktionen selbst und optimiert sich somit in Bezug auf die Bedürfnisse einer bestimmten Anwendergruppe.

Eine weitere vorteilhafte Ausbildung der Erfindung ist durch Mittel zum Erkennen von häufig auftretenden Schrittfolgen und zur Bereitstellung eines diese Schrittfolgen zusammenfassenden Makros für Anwender gekennzeichnet. Der Vorteil hierbei ist, dass ein Makro nicht wie allgemein üblich durch die Aufzeichnung bestimmter Schritte, die der Anwender durchführt, erstellt wird. Bei dieser Verfahrensweise ist es nachteilig, dass der Anwender einen Start- und einen Endpunkt angeben muss und dass alle Arbeitsschritte zwischen diesen zwei Punkten aufgenommen werden und anschließend das Makro bilden. Macht der Anwender während dieser Aufzeichnung einen Fehler bzw. läuft er eine unnütze Schleife, dann wird dies ebenfalls in das Makro aufgenommen. Der Anwender müsste sein Makro noch einmal neu erzeugen. Dies ist mit der vorliegenden Erfindung nicht nötig. Auf Basis der Analyse der Schrittketten und deren Vergleich mit dem System hinterlegten Bedienmustern, kann bei häufiger Wiederholung bestimmter Bedienmuster automatisch ein Makro erzeugt werden, das dem Anwender zur Verfügung gestellt werden kann, ohne dass er explizit ein Makro aufzeichnen muss. Hierbei wird einfach der Workflow analysiert und wenn eine Schrittkette bzw. ein bestimmter Workflow immer wieder durchgeführt wird, wird ein entsprechendes Makro für den Workflow erzeugt.

Eine weitere vorteilhafte Ausbildung der Erfindung ist dadurch gekennzeichnet, dass eine Anpassung der Benutzeroberfläche auf Basis der hinterlegten Bedienmuster vorgesehen ist. Wenn das System erkennt, dass bestimmte Bereiche der Software überhaupt nicht genutzt werden und in den Bedienmustern des Anwenders bzw. der Community überhaupt nicht vorkommen, so kann die Benutzeroberfläche der Software dahingehend adaptiert werden, dass bestimmte Bereiche mit Information nicht mehr zur Verfügung gestellt werden bzw. ausgeblendet werden oder verkleinert dargestellt werden. Im Rahmen eines Engineering Systems ist hierbei z.B. an die Bereitstellung von verschiedenen Baugruppen gedacht, die derart erfolgen kann, dass in einer ersten Sicht eben nur die Baugruppen bereitgestellt werden, die von dem Anwender bzw. von Community im Rahmen der Erstellung der Automatisierungslösung auch häufig genutzt werden.

Insgesamt ist zu vermerken, dass mit der vorliegenden Erfindung ein dynamisches Hilfesystem geschaffen wird, welches einerseits auf dem von den Anwendern selbst generierten Inhalt bzw. Content beruht. Auf Basis dieses generierten Inhalts, kann dem Anwender dann die bestmögliche Hilfestellung geboten werden. Es ist nicht mehr notwendig, dass der Hersteller sich vorher Gedanken über bestimmte Situationen macht und hierzu eine vordefinierte Hilfe bereitstellt, die dem Anwender in der Situation, in der er sich u.U. befindet gar nicht hilft, weil sie den Weg der zu dieser Situation geführt hat, nicht mitberücksichtigt. Dadurch dass die vom Anwender bzw. der Community getätigten Workflows dem System als Datenbasis wieder zur Verfügung gestellt werden, wird im Laufe der Zeit eine immer bessere Informationsbereitstellung über die Hilfe gewährleistet. Das System kann sich automatisch auch spezifische Eigenschaften beim Kunden bzw. der Community einstellen. Dies ist natürlich insbesondere der Fall, wenn der Anwender auch selbst zur automatisch generierten Abfolge von Arbeitsschritten auch noch die Dokumentationsmöglichkeit nutzt und diese Arbeitsabläufe kommentiert. Der Aufwand beim Anwender ist extrem gering, weil die Arbeitsschritte automatisch erfasst werden. Somit hat der Anwender keinen Aufwand damit, dem System überhaupt Information über seine Tätigkeit mitzuteilen. Bei der Problemanalyse wird somit mit Hilfe des Systems eine Bedienhandlung und nicht eine Einzelbedienung die nur auf eine Situation fokussiert, berücksichtigt. Damit wird die Qualität der bereitgestellten Hilfe deutlich erhöht. Zudem können die gespeicherten Bedienschrittketten exemplarisch abgespielt werden, um einem Anwender zu zeigen, wie sich das Befolgen einer Hilfestellung auswirken würde.

Im Folgenden wird die Erfindung anhand der Figuren näher beschrieben und erläutert. Es zeigen:
- FIG 1: zeigt eine schematische Darstellung des dynamischen Hilfesystems,
- FIG 2: zeigt eine schematische Darstellung der Erzeugung eines Makros.

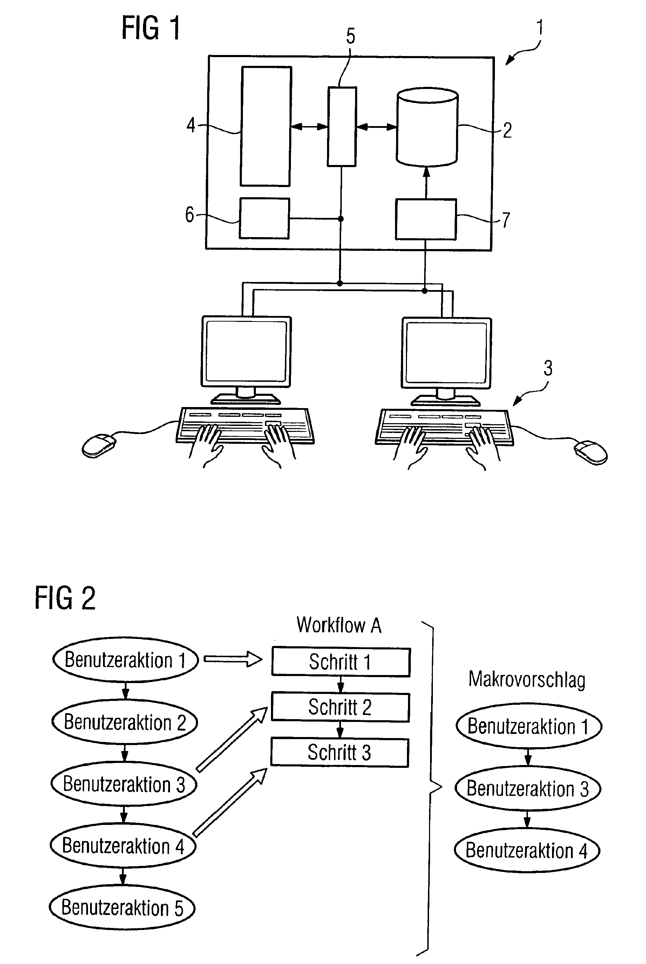

FIG 1 zeigt in schematischer Darstellung ein dynamisches Hilfesystem 1. In einem Speicher 2 werden Aktionen 3 die ein oder mehrere Anwender des Systems an ihren Rechnern tätigen protokolliert. Die Aktionen werden hierbei als Folge von Arbeitsschritten protokolliert. In einer Datenbasis 4 sind im dynamischen Hilfesystem 1 Bedienmuster in Form von Schrittketten hinterlegt. Mit Hilfe der Mittel 5 zum Erzeugen von Ablaufmustern wird mittels eines Vergleiches der protokollierten Arbeitsschritte mit den hinterlegten Schrittketten ein Arbeitsablaufmuster zu einem bestimmten Arbeitsablauf, also einer Folge von Arbeitsschritten eines Anwenders, protokolliert. Auf Basis des erzeugten Arbeitsablaufes wird eine Hilfeinformation 6 mit Hilfe des dynamischen Hilfesystems bereitgestellt. Die Hilfeinformation wird den Anwendern 3 über das System wieder zugeführt.

Aus den gerade stattfindenden Arbeitsschritten eines Anwenders kann mit Hilfe des Systems somit auf Basis von vorhandener Information, z.B. in Form von Ontologien, ein Workflow-Muster erkannt werden. Die Hilfeinformation wird somit nicht aufgrund einer einzelnen Situation bereitgestellt, sondern basiert auch auf der Historie der vom Anwender vorher getätigten Schritte. Hierbei können beispielsweise auch wiederkehrende Schrittketten oder Schrittketten ohne Ende erkannt werden. Erkennt das System eine derartige Schrittkette, so ist es dem System möglich, den Anwender hierüber zu informieren und beispielsweise über einen Button oder eine Anzeige auch mitzuteilen, dass er ein Problem hat. Wenn der Anwender für ein bestimmtes Problem eine Lösung gefunden hat, so ist es mit Hilfe des Systems ebenfalls möglich, die Lösung dem System wieder zuzuführen und in die bestehende Ontologie einfließen zu lassen. Dies kann vom Anwender gesteuert werden oder aber auch automatisch erfolgen. Die Ontologie stellt hierbei ein Netzwerk von Informationen dar. Durch Mitarbeit der Anwender kann die Ontologie aufgebaut bzw. erweitert werden, und die Datenbasis 4 die zur Erkennung von Arbeitsablaufmustern zur Verfügung steht, wird immer präziser. Das System justiert sich quasi selbst. Es ist damit immer mehr auf die Bedürfnisse seiner Anwender zugeschnitten. Beispielsweise kann das System erkennen, dass bestimmte Teile einer Software bzw. eines Anwenderprogrammes von beteiligten Anwendern nie genutzt werden und kann somit die Bereitstellung von Information auf die Nutzung der jeweiligen Community zuschneidern.

Das dynamische Hilfesystem 1 beruht somit auf Inhalt, der von den Anwendern selbst beigefügt wird. Im Gegensatz zu anderen Systemen ist somit nicht vom Hersteller vorgegeben, welche Information der Anwender zu welcher Zeit aus dem Hilfesystem bekommen kann. Die Hilfe ist aus diesem Grund besser auf den Kunden abgestimmt, da sie auf die spezifischen Eigenheiten beim jeweiligen Kunden bzw. der jeweiligen Anwender Community zugeschnitten ist bzw. der Einstellung auf den Benutzer. Die Arbeitsschritte können hierbei vom Benutzer auch noch kommentiert werden, so dass zukünftige Benutzer des Systems bereits Information, die direkt von einem Anwender kommt, zur Information verwenden können. Gespeicherte Bedienschrittketten können auch exemplarisch wieder abgespielt werden, um den Anwendern zu zeigen, wie sich das Befolgen einer bestimmten Hilfestellung, welche vom dynamischen Hilfesystem 1 gegeben wurde, auswirken würde. Das System wird somit quasi durch die eigenen Anwender trainiert und immer feingranular auf die Bedürfnisse der Anwender abgestimmt.

FIG 2 zeigt die schematische Darstellung der Erzeugung eines Makrovorschlages bzw. eines aufgezeichneten Makros. Der Benutzer hat mehrere Benutzerinteraktionen die hintereinander oder parallel ausgeführt werden. Nicht alle Benutzeraktionen gehören zu einem bestimmten Workflow, der von einem Anwender immer wieder ausgeführt wird. Das System erkennt, welche Benutzerinteraktionen zu einem bestimmten Workflow gehören, da diese Schrittketten vermehrt auftauchen. Irrelevante, nebensächliche oder sogar falsche Benutzeraktionen können auf diese Weise herausgefiltert werden. Ist ein Workflow durch ein oder mehrere Anwender mehrfach durchlaufen worden, so kann das System einen Makrovorschlag machen, indem es die wirklich für den Workflow relevanten Benutzeraktionen zu einem Makro zusammenfügt. Dieses kann als Vorschlag oder auch als aufgezeichnetes Makro im System hinterlegt werden. Die Abfolge der Benutzeraktionen wird hierbei anhand der Häufigkeit gewertet und nur wenn Benutzeraktionen in ihrer Folge einen bestimmten Schwellwert überschreiten, dann wird dies als Workflow erkannt und dem Anwender als Makro vorgeschlagen.

Die Erstellung bzw. der Vorschlag eines Makros kann sowohl für einen als auch für mehrere Anwender einer Community durchgeführt werden. Wird es für mehrere Anwender durchgeführt, bedeutet dies, dass die Erkennung von häufig wiederkehrenden Befehlsfolgen innerhalb von Workflows die Interaktion von mehreren Anwendern berücksichtigt. Auf dieser Basis können dann Vorschläge für Makros gemacht werden, die innerhalb einer Community sinnvoll sind. Hiermit wird vermieden, dass, wie heutzutage, die Aufzeichnung eines Makros durch einen Anwender direkt erfolgen muss bzw. dass überflüssige Aktionen bei der Aufzeichnung eines Makros in das Makro mit eingefügt werden.

Aus der Protokollierung der Arbeitsschritte und dem Aufbau der Datenbasis 4 bzw. der Ontologie auf Basis der Benutzung des Systems, ist es möglich, Workflow-Muster aus der Bedienung des Anwenders abzuleiten und im Fehlerfall durch die Betätigung eines Button einen neuen Eintrag in das Hilfesystem zu generieren. Hierdurch kann beispielsweise die FAQ-Liste durch Beteilung der Anwender erweitert werden. Mit Hilfe des Systems ist diese Vorgehensweise systematisiert, da in der Datenbasis 4 die Aktionen bzw. das Verhalten der Kunden und Anwender gespeichert wird. Die immer besser auf das Anwenderverhalten zugeschnittene Hilfeinformation kann anschließend auch als Know-How genutzt werden und weiteren Nutzern für den optimalen Umgang mit der Software bereitgestellt werden. Bereits generiertes Wissen kann also Know-How weiterverwendet und gegebenenfalls vermarktet werden.

Besonders vorteilhaft an dem System ist neben der dynamischen Bereitstellung von Hilfeinformation und der Aufzeichnung von Makros, dass das System in der Lage ist, die Eingaben bzw. das Bedienverhalten mehrerer Anwender einer Community zu analysieren. Hierdurch kann beispielsweise bei Nutzung eines Engineering Systems festgestellt werden, welche Baugruppen von den Anwendern primär für die Erstellung einer Automatisierungslösung genutzt werden. Die anderen Baugruppen, die selten oder nie genutzt werden, können dann automatisch vom System in den Hintergrund gebracht werden bzw. werden auf der obersten Ebene nicht mehr angezeigt. So kann sich die Bedienoberfläche automatisch den Bedürfnissen der Anwender gegenüber anpassen. Eine Anpassung kann jedoch auch direkt durch einen Anwender vorgenommen werden, da der Anwender jederzeit in der Lage ist, direkt auf das System Einfluss zu nehmen und mit ihm zu agieren. So können beispielsweise von den Anwendern ihre aufgezeichneten Arbeitsschritte dokumentiert werden. Damit lebt das System und ist insgesamt speziell dafür geeignet, einem Benutzer zu jedem Zeitpunkt die genau für ihn relevante Information bereitzustellen.

## Patentansprüche

1. Dynamisches Hilfesystem (1) mit
• einem Speicher (2) zur Protokollierung von Anwenderaktionen (3) als Folge von Arbeitsschritten,
• einer Datenbasis (4) von als Schrittketten hinterlegten Bedienmustern,
• Mittel (5) zum Erzeugen von Arbeitsablaufmustern durch einen Vergleich der protokollierten Arbeitsschritte mit den hinterlegten Schrittketten und
• einer Hilfefunktion zur Bereitstellung von zu einem Arbeitsablauf passender Hilfeinformation (6).

2. Dynamisches Hilfesystem (1) nach Anspruch 1, mit einer zentralen Einheit (7) zur Steuerung der Aktionen eines oder mehrerer Anwender.

3. Dynamisches Hilfesystem (1) nach Anspruch 1 oder 2, wobei die Hilfeinformation (6) als elektronisches Handbuch, Liste mit häufig gestellten Fragen, Links zum Internet bereitgestellt wird.

4. Dynamisches Hilfesystem (1) nach Anspruch 1 oder 2, wobei die Hilfeinformation als Verweis auf die Hotline erfolgt.

5. Dynamisches Hilfesystem (1) nach Anspruch 4, wobei eine Übertragung der protokollierten Arbeitsschritte an die Hotline vorgesehen ist.

6. Dynamisches Hilfesystem (1) nach einem der vorhergehenden Ansprüche, wobei das Hinzufügen von Folgen von Arbeitsschritten von Anwendern zur existierenden Datenbasis (4) von als Schrittketten hinterlegten Bedienmustern vorgesehen ist.

7. Dynamisches Hilfesystem (1) nach einem der vorhergehenden Ansprüche, wobei das direkte Hinzufügen von Information zur existierenden Datenbasis (4) durch Anwender vorgesehen ist.

8. Dynamisches Hilfesystem (1) nach Anspruch 7, wobei bereits hinzugefügte Information zur Überarbeitung oder Ergänzung durch weitere Anwender vorgesehen ist.

9. Dynamisches Hilfesystem (1) nach einem der vorhergehenden Ansprüche, bei dem mehrere Stationen zum Zugriff auf das Hilfesystem (1) durch Anwender vorgesehen sind.

10. Dynamisches Hilfesystem (1) nach einem der vorhergehenden Ansprüche, mit Mitteln zum Erkennen von häufig auftretenden Schrittfolgen und zur Bereitstellung eines diese Schrittfolgen zusammenfassenden Makros für Anwender.

11. Dynamisches Hilfesystem (1) nach einem der vorhergehenden Ansprüche, bei dem eine Anpassung der Benutzeroberfläche auf Basis der hinterlegten Bedienmuster vorgesehen ist.

12. Verfahren zur dynamischen Bereitstellung von Hilfeinformation, bei dem
• Anwenderaktionen als Folge von Arbeitsschritten protokolliert werden,
• Bedienmuster als Schrittketten in einer Datenbasis (4) hinterlegt werden,
• Arbeitsablaufmuster durch einen Vergleich der protokollierten Arbeitsschritte mit den hinterlegten Schrittketten erzeugt werden und
• passende Hilfeinformation (6) zu einem Arbeitsablauf durch eine Hilfefunktion bereitgestellt wird.

13. Verfahren zur dynamischen Bereitstellung von Hilfeinformation (6) nach Anspruch 12, bei dem die Aktionen eines oder mehrerer Anwender mittels einer zentralen Einheit (7) gesteuert werden.

14. Verfahren nach Anspruch 12 oder 13, bei dem die Hilfeinformation (6) als elektronisches Handbuch, Liste mit häufig gestellten Fragen, Links zum Internet bereitgestellt wird.

15. Verfahren nach Anspruch 12 oder 13, bei dem die Hilfeinformation (6) als Verweis auf die Hotline bereitgestellt wird.

16. Verfahren nach Anspruch 15, bei dem die protokollierten Arbeitsschritte an die Hotline übertragen werden.

17. Verfahren nach einem der Ansprüche 12 bis 16, bei dem Folgen von Arbeitsschritten von Anwendern zur existierenden Datenbasis (4) von als Schrittketten hinterlegten Bedienmustern hinzugefügt werden.

18. Verfahren nach einem der Ansprüche 12 bis 17, bei dem Information zur existierenden Datenbasis (4) durch Anwender direkt hinzugefügt werden.

19. Verfahren nach Anspruch 18, bei dem bereits hinzugefügte Information durch weitere Anwender überarbeitet oder ergänzt wird.

20. Verfahren nach einem der Ansprüche 12 bis 19, bei dem über mehrere Stationen auf das Hilfesystem (1) durch Anwender zugegriffen werden kann.

21. Verfahren nach einem der Ansprüche 12 bis 20, bei dem häufig auftretenden Schrittfolgen erkannt werden und ein diese Schrittfolgen zusammenfassendes Makro für Anwender bereitgestellt wird.

22. Verfahren nach einem der Ansprüche 12 bis 21, bei dem eine Anpassung der Benutzeroberfläche auf Basis der hinterlegten Bedienmuster vorgenommen wird.
